# EUROPEAN PATENT APPLICATION

(11) **EP 4 410 854 A1**
(43) Date of publication of application: **07.08.2024**
(21) Application number: 23305145.7
(22) Date of filing: 03.02.2023
(51) Int. Cl.: C08F 290/06, C08G 18/24, C08G 18/32, C08G 18/40, C08G 18/42, C08G 18/48, C08G 18/63, C08G 18/67, C08G 18/76, C08G 18/80, C09J 175/08, C08G 18/12, C08G 18/79

(54) **HIGH STRENGTH URETHANE ACRYLATE HYBRID STRUCTURE ADHESIVES**

(71) Applicant: ARKEMA FRANCE, 92700 Colombes (FR)
(72) Inventor: CHEN, Jianxia, DUBLIN, 43017 (US); BARKER, Michael, DUBLIN, 43017 (US)
(74) Representative: Arkema Patent

(57) **Abstract**

A polymerizable adhesive composition comprising a two-part hybrid polymerizable adhesive composition is disclosed. In particular, the polymerizable adhesive composition comprises (i) an organoborane amine complex; (ii) urethane pre-polymer; (iii) a free isocyanate; (iv) free polyol; (v) at least one free radically polymerizable component; (vi) (a) carbon black filler either alone or in combination with at least one additional filler; or (b) at least one graft polyether polyol containing polymer.

## Description

### FIELD OF THE INVENTION

The presently disclosed process(es), procedure(s), method(s), product(s), result(s), and/or concept(s) (collectively referred to hereinafter as the "present disclosure") relates generally to a polymerizable adhesive composition comprising a two-part hybrid adhesive composition, and methods of making and using a hybrid adhesive obtained from polymerization of the two-part hybrid adhesive composition.

### BACKGROUND OF THE INVENTION

Bonding of dissimilar materials poses difficult challenges for industrial adhesives. Different substrate materials have different coefficients of thermal expansion. When materials warm up, they expand but at different rates. For example, a long aluminum profile bonded to glass is expanding and contracting, and the glass can shatter because of thermal shock.

Generally, the industrial adhesives for bonding dissimilar materials must have low modulus and high elongation in addition to excellent adhesion. To meet these requirements, enormous quantities of plasticizers and toughening agents are added into polymerizable adhesive compositions. In addition, primers are used on some materials for good adhesion. Further, in structural adhesives, strength and strength retention are critical properties for applications. For low modulus adhesives, it is a challenge to achieve high strength and strength retention after water soak.

United States Patent No. 10844254 to Bostik Inc. discloses a polymerizable adhesive composition which comprise a two-part hybrid polymerizable adhesive comprising an organoborane monoamine complex, a free polyol comprising a dimer fatty polyol and a polyether polyol, at least one free radically polymerizable component, an isocyanate-terminated urethane pre-polymer, a free isocyanate and a low molecular weight chain extending compound.

United States Patent No. 6,740,716 to Dow Global Technologies Inc. discloses a two-part composition useful for initiating cure of one or more polymerizable monomers which cure when exposed to free radicals. The two-part adhesive composition comprises an organoborane amine complex in one part and an isocyanate in a second part which is capable of decomplexing the organoborane complex. The isocyanate containing compound react with the amine present in the composition to form urea, polyurea or polyurethane/urea phase. The urea or polyurea in the resulting polymerized product is 50 percent or less. Similarly, the polymerizable compounds is about 20 percent by weight or greater, or 95 percent by weight or less.

United States Patent No. 9,315,701 to Henkel discloses a two-part hybrid adhesive that comprise an organoborane amine complex, a polyamine, a component polymerizable by free radical polymerization, and a polyisocyanate component.

United States Patent No. 5,686,544 to 3M Innovation Properties Co discloses a composition comprising an organoborane polyamine complex and polyol. The composition can form a part of polymerization initiator system that also includes polyisocyanate.

PCT Application Publication No. 2021009446 discloses a two-component composition: a portion A comprising an organoborane complex having an amine; a portion B comprising a polymer having at least one acrylic group and at least one isocyanate group; the composition comprising at least one acrylic monomer or oligomer in portion A and/or in portion B of the composition.

United States Patent Application Publication No. 20060052523 to H.B. Fuller discloses a method making a laminate that includes preparing disclosed a general composition of urethane and acrylate hybrid using photo initiator to build green strength. This chemistry doesn't not apply to the field of application as described by the present patent application.

European Patent No. 308711 to Dow Global Technologies LLC discloses an adhesive containing high solid copolymer polyol polyurethane pre-polymer wherein the polyurethane pre-polymer is a reaction product of one or more polyisocyanates; one or more compound containing on average more than one isocyanate compound; and a dispersion triol containing particles of an organic polymer which is non-reactive with the isocyanate reactive compound and the polyisocyanate.

United States Patent No. 6555626 assigned to Avecia BV discloses an aqueous crosslinkable coating composition comprising an autooxidisably crosslinkable polymer, a not autooxidisably crosslinkable vinyl polymer bearing acetoacetyl groups and acetoacetyl-reactive groups to cross-link the vinyl polymer. The autoxidisably crosslinkable polymer is meant a polymer which crosslinks on exposure to oxygen from air by virtue of containing unsaturated fatty acid residues.

United States Patent No. 9,499,727 to Dow Global Technologies LLC teaches a composition comprising one or more isocyanate functional pre-polymers; one or more amorphous linear polymers; one or more forms of carbon black; one or more fillers other than carbon black; and one or more plasticizers.

Therefore, the need exists for a polymerizable adhesive composition with improved properties which can provide low modulus, high elongation, and excellent adhesion for bonding various substrates in the absence of plasticizers and/or toughening agents and also provide high strength and strength retention even after water soak.

### BRIEF DESCRIPTION

In one aspect, the present disclosure provides a polymerizable adhesive composition comprising (i) an organoborane amine complex; (ii) a free polyol; (iii) at least one free radically polymerizable component; (iv) a urethane pre-polymer (v) a free isocyanate; and (vi) (a) pre-dispersed carbon black filler either alone or in combination with at least one additional filler; and/or (b) at least one graft polyether polyol containing polymer.

In a second aspect the present disclosure provides a polymerizable adhesive composition comprising (i) an organoborane amine complex; (ii) a free polyol; (iii) at least one free radically polymerizable component; (iv) a urethane pre-polymer (v) a free isocyanate; and (vi) an additional component selected from the group comprising (a) pre-dispersed carbon black filler either alone or in combination with at least one additional filler; (b) at least one graft polyether polyol containing polymer; and (c) combinations thereof.

In one non-limiting embodiment of the present disclosure, the urethane pre-polymer may be an isocyanate terminated urethane pre-polymer. Non-limited examples of such pre-polymer may include a hybrid pre-polymer comprising isocyanate terminated urethane pre-polymer, or acrylate capped isocyanate terminated urethane pre-polymer, or acrylate terminated urethane pre-polymer, or any combinations thereof.

In another non-limiting embodiment of the present disclosure, the free polyol is selected from the group consisting of polyether polyols, polyester polyols, and any combinations thereof. In another non-limiting embodiment of the present disclosure, the free polyol can optionally further comprise a dimer fatty polyol, a cardanol based polyester polyol, poly-ε-caprolactone polyol, or any combinations thereof.

Still another aspect of the present disclosure provides a composition of matter comprising at least two substrates each having at least one surface and the polymerizable adhesive composition of the present disclosure, wherein the substrates comprise unsaturated polyester resin, vinyl ester resin, epoxy resin, metal, polypropylene, thermoplastic olefins, nylon, acrylonitrile-butadiene styrene and combinations thereof.

In yet another aspect of the present disclosure provides a method for bonding at least two substrates comprising steps of: (a) providing a first substrate with at least one surface, (b) providing a second substrate with at least one surface, (c) providing the polymerizable adhesive composition of the present disclosure; and (d) applying the polymerizable adhesive composition to the at least one surface of the first substrate, the second substrate or both the first and second substrates, aligning the first substrate and second substrate so that a surface of one of the substrates having the polymerizable adhesive composition is juxtaposed and in contact with a surface of the other substrate, and curing the polymerizable adhesive composition.

### DESCRIPTION OF THE INVENTION

Before explaining at least one embodiment of the inventive concept(s) in detail by way of exemplary drawings, experimentation, results, and laboratory procedures, it is to be understood that the inventive concept(s) is not limited in its application to the details of construction and the arrangement of the components set forth in the following description or illustrated in the drawings, experimentation and/or results. The inventive concept(s) is/are capable of other embodiments or of being practiced or carried out in various ways. As such, the language used herein is intended to be given the broadest possible scope and meaning; and the embodiments are meant to be exemplary - not exhaustive. Also, it is to be understood that the phraseology and terminology employed herein is for the purpose of description and should not be regarded as limiting.

Unless otherwise defined herein, scientific and technical terms used in connection with the present disclosure shall have the meanings that are commonly understood by those of ordinary skill in the art. Further, unless otherwise required by context, singular terms shall include pluralities and plural terms shall include the singular. Generally, nomenclatures utilized in connection with, and techniques of chemistry described herein are those well-known and commonly used in the art. Reactions and purification techniques are performed according to manufacturer's specifications or as commonly accomplished in the art or as described herein.

All patents, published patent applications, and non-patent publications mentioned in the specification are indicative of the level of skill of those skilled in the art to which this present disclosure pertains. All patents, published patent applications, and non-patent publications referenced in any portion of this application are herein expressly incorporated by reference in their entirety to the same extent as if each individual patent or publication was specifically and individually indicated to be incorporated by reference.

All of the compositions and/or methods disclosed and claimed herein can be made and executed without undue experimentation in light of the present disclosure. While the compositions and methods of this invention have been described in terms of preferred embodiments, it will be apparent to those of skill in the art that variations may be applied to the compositions and/or methods and in the steps or in the sequence of steps of the method described herein without departing from the concept, spirit and scope of the invention. All such similar substitutes and modifications apparent to those skilled in the art are deemed to be within the spirit, scope and concept of the inventive concept(s) as defined by the appended claims.

As utilized in accordance with the present disclosure, the following terms, unless otherwise indicated, shall be understood to have the following meanings:

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, and/or the variation that exists among the study subjects. The use of the term "at least one" will be understood to include one as well as any quantity more than one, including but not limited to, 2, 3, 4, 5, 10, 15, 20, 30, 40, 50, 100, etc. The term "at least one" may extend up to 100 or 1000 or more, depending on the term to which it is attached; in addition, the quantities of 100/1000 are not to be considered limiting, as higher limits may also produce satisfactory results. In addition, the use of the term "at least one of X, Y and Z" will be understood to include X alone, Y alone, and Z alone, as well as any combination of X, Y and Z.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The term "or combinations thereof" as used herein refers to all permutations and combinations of the listed items preceding the term. For example, "A, B, C, or combinations thereof" is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, MB, BBC, AAABCCCC, CBBAAA, CABABB, and so forth. The skilled artisan will understand that typically there is no limit on the number of items or terms in any combination, unless otherwise apparent from the context.

The term "monomer" refers to a small molecule that chemically bonds during polymerization to one or more monomers of the same or different kind to form a polymer.

The term "polymer" refers to a large molecule comprising one or more types of monomer residues (repeating units) connected by covalent chemical bonds. By this definition, polymer encompasses compounds wherein the number of monomer units may range from very few, which more commonly may be called as oligomers, to very many.

The present disclosure is directed to a polymerizable adhesive composition. In one preferred embodiment the present disclosure is directed to a polymerizable two-part hybrid adhesive composition comprising Part A and Part B. Part A may comprise a pre-polymer component comprising urethane pre-polymer, a free isocyanate, at least one free radically polymerizable component, and optionally at least one component pre-dispersed carbon back filler either alone or in combination with at least one additional filler. Part B may be a curative component comprising a free polyol, an organoborane amine complex, and optionally at least one graft polyether polyol containing polymer. Upon combination of the two parts, the free isocyanate acts as a decomplexing agent for the organoborane complex and liberate the borane, which subsequently initiates a free radical polymerization of the free radically polymerizable component along with a step-growth formation of a polyurethane by reacting the isocyanates with the polyols. In one aspect, the two-part hybrid adhesive composition comprises a two-part urethane/acrylate hybrid adhesive composition that can produce a hybrid polymer of polyurethane and polyacrylate. The hybrid adhesive composition according to the present disclosure can be either interpenetrating network of polyurethane and polyacrylate chains, or a urethane and acrylate copolymer.

### Part A Pre-Polymer:

The urethane pre-polymer according to the present disclosure can be a hybrid pre-polymer which can comprise an isocyanate terminated urethane pre-polymer or acrylate capped isocyanate terminated urethane pre-polymer or an acrylate terminated pre-polymer, or any combinations thereof. In one non-limiting embodiment of the present disclosure, the urethane pre-polymer is an isocyanate terminated urethane pre-polymer. The isocyanate terminated urethane pre-polymer can be prepared in-situ from polymerization of an excess isocyanates with free polyols present in the pre-polymer part. In one non-limiting embodiment of the present disclosure, the isocyanate-terminated urethane pre-polymers can be prepared by mixing polyols, drying the polyols at a temperature of from about 80° C. to about 105° C., adding diisocyanates at about or less than 65° C., and increasing the temperature to about 80° C. to about 105° C., allowed to react at this temperature range for about one hour or until the isocyanate content (as determined by n-butyl amine titration) reaches the theoretical value (or slightly lower). The reaction can be conducted under vacuum. In another non-limiting embodiment of the present disclosure, the urethane pre-polymer is a hybrid pre-polymer comprising an isocyanate terminated urethane pre-polymer or acrylate capped isocyanate terminated urethane pre-polymer or an acrylate terminated pre-polymer, or any combinations thereof. In this particular embodiment, the formation of acrylate capped isocyanate terminated urethane pre-polymer, or an acrylate terminated pre-polymer along with the isocyanate terminated urethane pre-polymer mainly depends on type of free radically polymerizable component used including its weight proportion. The free-radically polymerizable component that has isocyanate reactive functional groups are particularly suitable for this type of hybrid pre-polymer, for example, hydroxy methacrylate. Further, the isocyanate terminated pre-polymer can be present in higher weight proportion than acrylate capped isocyanate terminated urethane pre-polymer and an acrylate terminated pre-polymer either alone or in combination.

In one non-limiting embodiment of the present disclosure, if the free radically polymerizable component used in the present adhesive composition does not comprise any isocyanate reactive functional group, then the urethane pre-polymer is 100 % isocyanate terminated urethane pre-polymer.

Alternatively, the isocyanate-terminated urethane pre-polymer available commercially can directly be used in the two-part hybrid adhesive composition. For example, Vorite^{®} 689, commercially available from Caschem, can be used. As a result, the Part A pre-polymer component can comprise a stoichiometric isocyanate, a stoichiometric polyol, an excess isocyanate and at least one free radically polymerizable component, and the carbon filler either alone or in combination with additional filler. Further, the free isocyanate, the stoichiometric isocyanate and the excess isocyanate can be the same or different isocyanates.

Any suitable isocyanates, which contains two or more isocyanate groups, can be used in the present disclosure as the stoichiometric isocyanates, the excess isocyanates and the free isocyanates. The isocyanates can be monomeric or polymeric isocyanate including aromatic, aliphatic and cycloaliphatic polyisocyanates.

The polyisocyanates can be diisocyanates that include aliphatic, cycloaliphatic, aromatic and aliphatic-aromatic diisocyanates. Specific examples of the aliphatic and cycloaliphatic diisocyanates can include, but are not limited to, ethylene diisocyanate, ethylidene diisocyanate, propylene diisocyanate, butylene diisocyanate, trimethylene diisocyanate, cyclopentylene-1,3-diisocyanate, cyclo-hexylene-1,4-diisocyanate, cyclohexylene-1,2-diisocyanate, dichlorohexa-methylene diisocyanate, furfurylidene diisocyanate, 1,4-tetramethylene diisocyanate, 1,6-hexamethylene diisocyanate, 2,2,4-trimethyl-1,6-hexamethylene diisocyanate, 1,12-dodecamethylene diisocyanate, 1-isocyanato-2-isocyanatomethyl cyclopentane, 1-isocyanato-3-isocyanato-methyl-3,5,5-trimethylcyclohexane (isophorone diisocyanate or IPDI), bis-(4-isocyanatocyclohexyl)-methane, 2,4'-dicyclohexylmethane diisocyanate, 1,3- or 1,4-bis-(isocyanatomethyl)-cyclohexane, bis-(4-isocyanato-3-methylcyclohexyl)-methane, α',α',α',α'-tetramethyl-1,3- and/or -1,4-xylylene diisocyanate, 1-isocyanato-1-methyl-4(3)-isocyanatomethyl cyclohexane, 2,4- or 2,6-hexahydrotoluylene diisocyanate, and the like.

Specific examples of the aromatic and aliphatic-aromatic diisocyanates can include, but are not limited to, 2,4- or 2,6-toluene diisocyanate, 4,4'-diphenylmethane diisocyanate, 2,2-diphenylpropane-4,4'-diisocyanate, xylylene diisocyanate, 1,4-naphthylene diisocyanate, 1,5-naphthylene diisocyanate, m-phenylene diisocyanate, p-phenylene diisocyanate, diphenyl-4,4'-diisocyanate, azobenzene-4,4'-diisocyanate, diphenylsulphone-4,4'-diisocyanate, 2,4-tolylene diisocyanate, 1-chlorobenzene-2,4-diisocyanate, 4,4',4"-triisocyanatotriphenylmethane, 1,3,5-triisocyanato-benzene, 2,4,6-triisocyanato-toluene, 4,4'-dimethyldiphenyl-methane-2,2',5,5-tetratetraisocyanate, and modified aromatic diisocyanates containing carbodiimide groups, urethane groups, allophanate groups, isocyanurate groups, urea groups or biuret.

The modified aromatic diisocyanate can be uretonimine modified isocyanate, which can be derived from 2,4- or 2,6-tolylene diisocyanate; or derived from 4,4'- or 2,4'-diphenylmethane diisocyanate such as uretonimine modified 4,4'-diphenylmethane diisocyanate. Suitable uretonimine modified isocyanates can include Rubinate^{®} 1680, commercially available from Huntsman Corporation; and ISONATE^{™} 143L Modified MDI, commercially available from The Dow Chemicals Company.

In one non-limiting embodiment, the isocyanates can be hexamethylene diisocyanate, toluene diisocyanate (TDI), isophoronediisocyanate (IPDI), methyenebisphenyldiisocyanate (MDI), hydrogenated MDI (HMDI) or poly-MDI (with functionality greater than 2).

The stoichiometric polyols can be any polyols that are suitable for making polyurethanes. They can be polyols based on polyalkylene oxides, polyester or combinations thereof, which can include bulky side chains and/or long hydrophobic chains. The polyols based on polyalkylene oxides are often referred to as polyether polyols. The polyols can also include polyamide polyols, polycaprolactone polyols such as poly-ε-caprolactone polyol, polycarbonate polyols, hydroxyl terminated polybutadienes such as fully-hydrogenated hydroxy-terminated polybutadiene and/or partially-hydrogenated hydroxy-terminated polybutadiene, polyisobutylene diols, as well as mixtures thereof.

Polyether polyols can include a linear and/or branched polyether having hydroxyl groups. Examples of the polyether polyols may include substituted and/or unsubstituted polyoxyalkylene polyols such as polyethylene glycol, polypropylene glycol, polybutylene glycol and the like. Further, a homopolymer and a copolymer of the polyoxyalkylene polyols may also be employed. Particularly, the copolymers of the polyoxyalkylene polyols may include an adduct having at least one compound selected from the group consisting of ethylene glycol, propylene glycol, diethylene glycol, dipropylene glycol, triethylene glycol, 2-ethylhexanediol-1,3-glycerin, 1,2,6-hexane triol, trimethylol propane, trimethylol ethane, tris(hydroxyphenyl)propane, triethanolamine, triisopropanolamine, ethylenediamine and ethanolamine; with at least one compound selected from the group consisting of ethylene oxide, propylene oxide and butylene oxide.

These polyether polyols are known and may be obtained, for example, by polymerizing tetrahydrofuran or epoxides such as, for example, ethylene oxide, propylene oxide, butylene oxide, styrene oxide or epichlorohydrin in the presence of suitable catalysts, such as, for example, BF3 or KOH, or by chemically adding these epoxides, preferably ethylene oxide and propylene oxide, in admixture or successively to components containing reactive hydrogen atoms such as water, alcohols or amines. Examples of suitable alcohols and amines include the low molecular weight chain extending compounds of the present disclosure, propylene glycol, glycerin, ethylene glycol, triethanolamine, water, trimethylolpropane, bisphenol A, aniline, ammonia, ethanolamine and ethylene diamine.

The polyether polyols can include polymers of propylene oxides and/or copolymers of ethylene and propylene oxides, wherein the oxides contain. In one non-limiting embodiment, the polyether polyol is ethylene oxide capped polypropylene oxide.

The number average molecular weights of the polyether polyol can typically be varied from about 2,000 Daltons to about 20,000 Daltons or in a range of about 3,500 Daltons to about 12,000 Daltons, or in the range of from about 2,000 Daltons to about 12,000 Daltons. For example, Acclaim^{®} 4220N polyol (commercially available from Covestro) is based on propylene oxide and terminated by ethylene oxide, having number average molecular weights of 4000 Daltons.

The polyether polyols used in the present disclosure may include one or more 2-functionality polyether polyols, one or more 3-functionality polyether polyols, one or more 4-functionality polyether polyols, or their combinations thereof. The number average molecular weights of the 2-functionality polyether polyols can be varied from about 2,000 to about 20,000 Daltons, or in a range of about 2,000-12,000 Daltons. For example, Pluracol^{®} P2010 is a polyether polyol having a number average molecular weight of 2000 Daltons, which is commercially available from BASF. The molecular weight of the 3-functionality polyether polyols can be varied from about 84 to about 20,000 Daltons or in a range of about 100-12,000 Daltons, including Pluracol^{®} TP-440 polyol commercially available from BASF. The molecular weight of the 4-functionality polyether polyols can be varied from about 100 to about 20,000 Daltons or in a range of about 400-12,000 Daltons. For example, Pluracol^{®} 355 is a polyether polyol having a number average molecular weight of 600 Daltons, which is commercially available from BASF. In some embodiments the polyether polyol will have a molecular weight of at least 4,000 Daltons. In an alternative example, the polyether polyol will have a molecular weight of no more than about 4,000 Daltons, preferably less than about 3,000 Daltons.

The polyols based on polyesters (also called polyester polyols) can include amorphous and liquid polyester polyols, fatty acid polyester polyols such as castor oil and vegetable oils having different molecular weights and functionalities.

The polyester polyols can be formed as reaction products of one or more carboxylic acids with one or more polyols such as diols and/or triols. Among the carboxylic acids useful in forming the polyester polyols can include, but are not limited to, adipic, glutaric, succinic, malonic, oxalic and mixtures thereof. Among the diols useful in forming the polyester polyols can include, but are not limited to, ethylene glycol, propanediol, butanediol, neopentyldiol, pentanediol and hexanediol and mixtures thereof. Among the triols which are considered useful in forming the polyester polyol can include trimethylol propane.

Examples of the fatty acid polyester polyols may include castor oil, the products of hydroxylation of unsaturated or polyunsaturated natural oils, the products of hydrogenations of unsaturated or polyunsaturated polyhydroxyl natural oils, polyhydroxyl esters of alkyl hydroxyl fatty acids, polymerized natural oils, soybean polyol, alkylhydroxylated amides of fatty acids, and cashew nutshell liquid.

In one non-limiting embodiment, the polyester polyol can be obtained from a reaction of a triol with azelaic acid. The triol can be glycerol. One example of such polyester polyol is Emerox^{®} 14001, which is derived from natural oils and commercially available from Emery Oleochemicals Company.

The number average molecular weight of the polyester polyol is typically varied from about 1,000 to about 20,000 Daltons, or in a range of about 1,300-10,000 Daltons. Admex^{™} 525 polyol (commercially available from Eastman Chemical Company) is a 1,400-molecular-weight polyester polyol and may be used.

The natural substitutes of the polyester polyols can also be used to make the isocyanate-terminated urethane pre-polymer. Cardanol such as 3-(8-pentadecenyl)phenol, a natural phenolic compound with a long chain unsaturated fatty side chain that is extracted from cashew nuts can be used. For example, GX-9201 polyol (commercially available from Cardolite Corporation), a 1,500-molecular-weight polyester diol with a long unsaturated fatty side chain may be used.

Further, the polyester polyols or polyether polyols useful for the purpose of the present disclosure can contain bulky side chains and/or long hydrophobic chains. The bulky side chains can act as an umbrella. The number average molecular weight of the polyol with bulky side chains can typically varied from about 1,000 to about 20,000 Daltons, or in a range of about 2,000 to about 12,000 Daltons. The number average molecular weight of the polyol with long hydrophobic chains is typically varied from about 1,000 to about 20,000 Daltons, or in a range of about 1,500 to about 12,000 Daltons. For examples, Priplast 3238 (commercially available from Croda) can be used.

Further, the free polyols according to the present disclosure can optionally comprise a dimer fatty polyol. The dimer fatty polyol can be derived from a dimer fatty acid with a diol or from a dimer fatty diol with a diacid. The term dimer fatty acid is well known in the art and refers to as a dimerization product of mono- or polyunsaturated fatty acids and/or esters. Dimer fatty acids are described in T. E. Breuer, `Dimer Acids', in J. I. Kroschwitz (ed.), Kirk-Othmer Encyclopedia of Chemical Technology, 4th Ed., Wily, N.Y., 1993, Vol. 8, pp. 223-237, which is hereby incorporated by reference in its entirety. They can be prepared by polymerizing fatty acids under pressure, and then removing most of the unreacted fatty acid starting materials by distillation. The final products usually contain a small amount of mono fatty acid and trimer fatty acids but are mostly made up of dimer fatty acids. The resultant products can be prepared with various proportions of the different fatty acids as desired.

The dimer fatty acids used in the present disclosure are dimers that can be derived from the dimerization products of C10 to C30 fatty acids, or C12 to C24 fatty acids, or C14 to C22 fatty acids, or C16 to C20 fatty acids, or C18 fatty acids. Thus, the resulting dimer fatty acids comprise in a range of from 20 to 60, or from 24 to 48, or from 28 to 44, or from 32 to 40, or 36 carbon atoms.

The fatty acids, from which the dimer fatty acids are derived, may be selected from linear or branched unsaturated fatty acids. The unsaturated fatty acids may be selected from the fatty acids having either a cis/trans configuration and may have one or more than one unsaturated double bonds.

Suitable dimer fatty acids can be derived from (i.e. are the dimer equivalents of) the dimerization products of oleic acid, linoleic acid, linolenic acid, palmitoleic acid, or elaidic acid. In one non-limiting embodiment, the dimer fatty acid is derived from oleic acid.

The dimer fatty acids may be dimerization products of unsaturated fatty acid mixtures obtained from the hydrolysis of natural fats and oils, e.g. sunflower oil, soybean oil, olive oil, rapeseed oil, cottonseed oil, or tall oil.

The diols can be any diols that react with the dimer fatty acids. Suitable diols can include straight chain aliphatic diols such as ethylene glycol, diethylene glycol, 1,3-propylene glycol, dipropylene glycol, 1,4-butylene glycol, 1,6-hexylene glycol (also known as hexanediol) and mixtures thereof; branched diols such as neopentyl glycol, 3-methyl pentane glycol, 1,2-propylene glycol and mixtures thereof; and cyclic diols such as 1,4-bis(hydroxymethyl)cyclohexane and 1,4-cyclohexane-dimethanol and mixtures thereof.

Dimer fatty diols can be formed by hydrogenation of the corresponding dimer fatty acids. The same descriptions herein for the dimer fatty acids can apply to the corresponding dimer fatty diols. The diacids can be any acids that can react with diols and can be selected from the group consisting of adipic acid, glutaric acid, succinic acid, pimelic acid, suberic acid, azelaic acid, sebacic acid, heptane dicarboxylic acid, octane dicarboxylic acid, nonane dicarboxylic acid, decane dicarboxylic acid, undecane dicarboxylic acid, dodecane dicarboxylic acid, and combinations thereof. The commercially available dimer fatty polyols can also be used in the present disclosure. Suitable examples of such products, can include, but are not limited, Priplast^{™} 3238 and Priplast^{™} 1838 polyols (commercially available from Croda Coatings & Polymers) having 2,000-molecular-weight polyester diols with bulky side chain.

The dimer fatty polyols herein are specific polyester polyols with bulky side chains and thus can also be used as polyols to make isocyanate-terminated urethane pre-polymers as described previously.

In addition to the dimer fatty polyols and the polyether polyols, the free polyols in the present disclosure can further comprise other polyols including urethane modified polyols. The urethane modified polyols can include hydroxyl-terminated urethane pre-polymer. The hydroxyl-terminated urethane pre-polymer available commercially can directly be used. The hydroxyl-terminated urethane pre-polymer can also be prepared in-situ from polymerization of excess polyols with isocyanates, or from reactions of polyols with isocyanate-terminated urethane pre-polymers.

NCO contents in the isocyanate-terminated urethane pre-polymer can be ranged from about 1.0% to about 30.0% by weight, or from about 5.0% to about 20.0%, or from about 3.0 % to about 20.0 % by weight based on the weight of the isocyanate-terminated urethane pre-polymer.

The at least one free radically polymerizable component in the present disclosure can include any monomers, oligomers, polymers or mixtures thereof which can contain olefinic unsaturation and can polymerize by free-radical addition polymerizations. Styrenic, vinyl, acrylic and methacrylic monomers and/or oligomers are suitable examples. These can include styrene, alpha-methyl styrene, vinyl esters such as vinyl neodecanoate and vinyl acetate, acrylic and methacrylic monomers or oligomers such as acrylic acid, acrylamide, acrylonitrile and acrylate. These materials form the additionally polymerized network initiated by the liberated organoborane. A variety of monomers can be used, and their choices will depend on the final adhesive properties desired and the substrates to be bonded.

Suitable acrylic monomers include acrylamide and/or methylacrylamide monomers, acrylonitrile monomers, or acrylate monomers. In one non-limiting embodiment, the acrylic monomers can be acrylate monomers. The acrylate monomers can have the chemical structure as shown below:

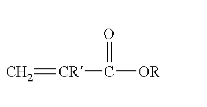

where R can be alkyl, cycloalkyl, or bicycloalkyl with or without other function groups such as hydroxyl, urethane, epoxy, or phenolic oligomers; and R' can be either hydrogen or a methyl group.

In one non-limiting embodiment, the acrylate monomers can include alkyl and cycloalkyl acrylates, alkyl methacrylates, and hydroxyl alkyl acrylates and methacrylates. Examples of the alkyl and cycloalkyl acrylates can include, but are not limited to, methyl acrylate, ethyl acrylate, n-propyl acrylate, n-butyl acrylate, t-butyl acrylate, isobutyl acrylate, isobornyl acrylate, n-octyl acrylate, 2-ethylhexyl acrylate, glycidyl acrylate, cyclohexyl acrylate, and tetrahydrofurfuryl acrylate.

The alkyl methacrylates can be selected from the group consisting of methyl methacrylate, ethyl methacrylate, n-butyl methacrylate, t-butyl methacrylate, isobutyl methacrylate, 2-ethylhexyl methacrylate, isobornyl methacrylate, decyl methacrylate, dodecyl methacrylate, glycidyl methacrylate, tetrahydrofurfuryl methacrylate, n-propyl methacrylate, and combinations thereof.

Examples of the hydroxyl alkyl acrylates and methacrylates can include, but are not limited to, hydroxy propyl acrylate, hydroxyl methyl methacrylate, hydroxyl ethyl methacrylate, hydroxy propyl methacrylate, and combinations thereof.

Acrylic and/or methacrylic oligomers can include acrylate and/or methacrylate terminated urethane, or epoxy, or both. Examples can include, but are not limited to, CN1963 (an aliphatic polyester-based urethane dimethacrylate oligomer) and CN 1964 (a low molecular weight urethane dimethacrylates,) polyurethane acrylates and bisphenol-A based acrylates as well as common crosslinkers such as hexanediol diacrylate, trimethylol propane triacrylate, and pentaerythritol triacrylate, which are all commercially available from Sartomer Americas. Other examples include EBECRYL^{®} 4827 (an aromatic urethane diacrylate) and EBECRYL^{®} 8804 (an aliphatic urethane diacrylate), which are commercially available from Allnex Company.

In one non-limiting embodiment, blends of tetrahydrofurfury methacrylate and hydroxyl propyl methacrylate can be used, where the equivalents of hydroxyl groups are sufficient to react with less than about 35%, or less than about 15% by equivalent of the isocyanate groups.

The Part A pre-polymer component of the present composition can comprise up to about 60 weight percent of pre-dispersed carbon black filler. Preferably the pre-dispersed carbon black filler comprises more than 1 percent by weight of the pre-polymer. In one non-limiting embodiment of the present disclosure, the amount of pre-dispersed carbon black filler can vary in the range of from about 5.0% to about 40.0 % by weight, or from about 10.0 to about 30.0 percent by weight, or from about 10.0 to about 20.0 percent by weight, no more than about 20 percent by weight, or from about 6.0 % to about 20.0% by weight, based on the total weight of the pre-polymer component. The pre-polymer component of the present disclosure can further comprise at least one additional filler other than the carbon black. Suitable examples of such additional filler can include, but are not limited to, talc, mica, kaolin, bentone clay, aluminum oxides, titanium oxides, iron oxides, barium sulfate, homblends, amphibiles, chrysotile, carbon fibers, fumed silica, molecular sieves, calcium carbonate, wollastonite, hollow sphere glass or ceramic, glass beads, fiber glass, and combinations thereof. In one non-limiting embodiment, the additional filler can be talc, such as MISTRON^{®} RCS talc commercially available from Rio Tinto Minerals, London, U.K.

Regarding the pre-dispersion of the carbon black, it may be pre-dispersed in a paste with up to 50% by weight loading rate. Examples of carbon black dispersions include Gilsonite^{®} from American Gilsonite, Vanisperse^{®} CB and Marasperse^{®} CBOS-4 both from Borregaard, Spheron^{®} carbon black and Emperor^{®} carbon black both from Cabot Corporation and Stan-Tone^{®} black from Avient.

Preferably, the paste with the pre-dispersed carbon black has a viscosity of less than 50,000 cP at 25°C, more preferably less than 30,000 cP at 25°C and even more preferably less than 25,000 cP at 25°C.

The total isocyanate content including the isocyanate content in the urethane pre-polymer and the free isocyanate, in the Part A component of the present adhesive composition can vary in the range of from about 2.0 wt.% to about 98.0 wt.%, or from about 30.0 wt.% to about 98.0 wt.%, or from about 70.0 wt.% to about 98.0 wt.%, or from about 90.0 wt.% to 98.0 wt.% by weight, based on the weight of the Part A excluding fillers. Similarly, the amount of free radically polymerizable component can vary in the range of from about 2.0 wt. % to about 98.0 wt.%, or from about 2.0 wt. % to about 70.0 wt. %, or from about 2.0 wt. % to about 30.0 wt. %, based on the weight of the Part A excluding fillers.

### Part B Curative:

The free polyols used in the Part B curative component of the present composition can be the same or different as those described earlier for the Part A pre-polymer component or different polyols can also be used. The free polyol may be a polyether polyol. In one non-limiting embodiment, the polyether polyol is a polymer of propylene oxide or a copolymer of ethylene and propylene oxide. In another non-limiting embodiment, the free polyol may be a cardanol based polyester polyol or poly-ε-caprolactone polyol.

Further, the Part B curative component of the present adhesive composition can optionally comprise a low molecular chain extending compound. The low molecular weight chain extending compound useful for the purpose of the present disclosure can either be hydroxyl terminated or amine terminated. In one non-limiting embodiment of the present disclosure, the chain extending compound can be a hydroxyl terminated one including a low molecular weight polyol that has a molecular weight ranged from about 25 to about 1,000 Daltons, or from about 32 to about 600 Daltons. The non-urethane modified low molecular weight chain extending compound may be selected from the group consisting of ethylene glycol, diethylene glycol, 1,5-pentandiol, 1,3-pentandiol, 1,3-butanediol, 1,4-butylene glycol, 1,2-propylene glycol, 1,3-propylene glycol, 1,6-hexylene glycol, dipropylene glycol, neopentyl glycol, 3-methyl pentane diol, 1,4-cyclohexane-dimethanol, and the combinations thereof. In one non-limiting embodiment, the non-urethane modified low molecular weight chain extending compounds can include 1,4-butylene glycol, ethylene glycol, 1,2-propylene glycol, dipropylene glycol and the combinations thereof.

Examples of the organoborane amine complex in the present disclosure may include an oxidatively stable complex of a trialkyl borane with a nitrogen-containing compound. It can be formed in-situ, during mixing of this part of the adhesive composition, or for ease of processing that is formed in a separate step. The structure of the complex can be varied to alter the reactivity. Procedures for preparation of the organoborane complexes and the stability of various complexes are described in M. F. Sonnenschein et al., Macromolecules, 2006, 39, 2507-2513, and U.S. Pat. No. 6,710,145 B2, which are hereby incorporated by reference in their entireties.

The alkyl group in the organoborane complex can include a C1-C10 alkyl or C4-C10 alkyl cycloalkyl. In one non-limiting embodiment, the alkyl groups are C1-C5 alkyls, linear and/or branched.

The Part B curative component can comprise from about 0.02 wt.% to about 3.0 wt.%, or from about 0.01 wt. % to about 3.0 wt. %, or from about 0.05 wt. % to about 2.0 wt %, or from 0.05 wt. % to about 1.5 wt. % of the organoborane complex and about 75.0 wt. % to about 99.0 wt. %, or from about 85.0 wt % to about 95.0 wt % of the free polyols based on the weight of the Part B excluding fillers.

Further, the Part B curative component of the present polymerizable adhesive composition can also comprises at least one polymer or pre-polymer containing one or more polyether polyols having dispersed therein or grafted to the backbone one or more organic based polymer particles dispersed therein. The one or more organic based polymer particles are based on monovinylidene aromatic monomers and copolymers of monovinylidene aromatic monomers with conjugated dienes, acrylates, methacrylates, unsaturated nitrites or mixtures thereof. The copolymers can be block or random copolymers. In one non-limiting embodiment of the present disclosure, the one or more organic based polymer particles comprise copolymers of unsaturated nitrites, conjugated dienes and a monovinylidene aromatic monomer, a copolymer of an unsaturated nitrile and a monovinylidene aromatic monomer or a polyurea. In another non-limiting embodiment of the present disclosure, the particles comprise polystyrene-acrylonitrile copolymers being most preferred. Preferably, the organic based polymer particles are included in the pre-polymer by inclusion of a polyol containing them, preferably a triol, having dispersed therein particles of an organic based polymer, for example one or more of thermoplastic polymers, rubber-modified thermoplastic polymers or a polyureas dispersed in one or more triols. Preferable polyols having organic polymer particles dispersed therein or grafted thereto are disclosed in Zhou, U.S. Pat. No. 6,709,539 at column 4, line 13 to column 6, line 18, incorporated herein by reference. Preferably, the polyols used to disperse the organic particles is one or more polyether triols as described herein. Preferably pre-polymers containing one or more organic based polymers particles are present in compositions of the invention in a sufficient amount to enhance the elastomeric nature and the modulus of the compositions.

The graft polyether polyol containing polymer can be present in an amount of from about 5.0 wt.% to about 50.0 wt.%, based on Part B Curative component weight or in the range of from about 2.5 wt.% to about 25.0 wt.%, based on the total weight of the polymerizable adhesive composition.

The nitrogen-containing compound can be substituted and/or unsubstituted primary, secondary, tertiary amines; diamines; pyridines; pyrroles; and carbazoles. Examples of the organoborane complex can include, but are not limited to, triethylborane dimethylaminopropyl amine complex, tributylborane dimethylaminopropyl amine complex, triethylborane pyrrolidine complex, tri-t-butylborane pyrrolidine complex, triethylborane pyridine complex, tri-t-butyl pyridine complex, triethylborane methoxypropyl amine complex, and tributylborane methoxypropyl amine complex. In one non-limiting embodiment, the organoborane complex is tributylborane methoxypropyl amine complex.

In addition, the Part B curative component may, optionally, comprise a polyamine to create chemical thixotropy in the blended system by immediately reacting with the isocyanate in the Part A pre-polymer component to form a pseudo gel creating body to eliminate sag. The polyamine may be aliphatic, cycloaliphatic or aromatic, having a functionality of about 2 or higher and should not be sterically hindered as to prevent immediate reaction with isocyanate. The polyamines can be diamines, triamines, tetraamines and related polymeric amines where the polyamines can contain 2, 3, 4 ore more nitrogen atoms.

The chemical thixotropy creating amines can be those comprising primary or secondary amine groups. Examples of the primary or secondary diamines can include, but are not limited to, hadrazine, ethylene diamine, propylene diamine, butylene diamine, amylene diamine, hexylene diamine, isophorone diamine and methane dianiline, toluene diamine, isophorone diamine, 2-methyl-1,5-pentane diamine, diethylene triamine, pentamethylene diamine, 1-methyl-3,5-diethyl-2,6-diamino benzene, diethylene diamine, hexamethylenediamine, bis(4-aminocyclohexyl)methane, 1-amino-3,3,5-trimethyl-5-aminomethylcyclohexane, 2,4-diaminomesitylene, 1,3,5-triethyl-2,4-diaminobenzene, 1,8-diamino napthelene, piperazine, dialkyl-N,N'-alkylene diamines where the total numbers of carbon atoms in the alkyl and alkylene can be varied from about 4 to about 20 such as dimethyl or diethyl-ethylene or propylene diamine, and combinations thereof.

In one non-limiting embodiment, the polyamine is piperazine. The concentration of the polyamine may be up to about 25 equivalent percent based on the isocyanate reactive components in the Part A pre-polymer component, including from about 0 to about 25 equivalent percent, such as in a range of about 0 equivalent percent to about 20 equivalent percent, or about 1 to about 20 equivalent percent, based on the isocyanate reactive components in the Part A pre-polymer component. In one embodiment, the amount of polyamine present is about 5 to about 20 equivalent percent. In another embodiment, the amount of polyamine present is about 10-15 equivalent percent. In these embodiments, the polyamine may be less than about 5 percent by weight of the composition, preferably no more than about 2 percent by weight, even more preferably less than about 2 percent by weight.

Further, the Part B curative component of the present disclosure can optionally comprise the at least one additional filler as herein described for Part A pre-polymer component of the present disclosure.

Fumed silica, in either the Part A pre-polymer component or Part B curative component, provides thixotropic viscosity enhancement to assist in the minimization of filler settling and for better mixing. Hydrophilic fumed silica, hydrophobic fumed silica, and combinations thereof may be used. AEROSIL^{®} R972 fumed silica, commercially available from EVONIK^{®} Industries AG, Essen, Germany may be used. The amounts of fumed silica in the Part A pre-polymer component or Part B curative component may be up to about 10 weight percent, or from about 0.2 to about 5 weight percent, of the overall composition, or of each component part of the polymerizable adhesive composition.

Suitable molecular sieves can be selected such that the pore opening is appropriate for the absorption of moisture. The molecular sieves may be present in the Part A pre-polymer component, the Part B curative component or in both components. In one non-limiting embodiment, the pore size is about 3 to about 5 angstroms. In one non-limiting embodiment, Type 5A molecular sieves can be used. The amounts of molecular sieves in the Part A pre-polymer component or Part B curative component may be up to about 20 weight percent, or from about 1 to about 15 weight percent in either or both parts.

Catalysts can be present in the process of preparing the polymerizable adhesive composition. The Part B curative component can optionally comprise one or more catalysts. The catalysts used in the present disclosure can be tertiary amines and/or organometallic catalysts. Examples of the tertiary amines can include, but are not limited to, triethyl amine, benzyl dimethylamine, triethylenediamine, tetramethylbutane diamine, diazobicycloundecene and combinations thereof.

The organometallic catalysts can include, for example organometallic compounds of tin, lead, iron, bismuth, mercury, etc. Examples of the organometallic compounds can include, but are not limited to, tin acetate, tin octoate, tin ethylhexanoate, tin oleate, tin laurate, dimethyltin dilaurate, dibutyltin oxide, dibutyltin dichloride, dimethyltin dichloride, dibutyltin diacetate, diethyltin diacetate, dimethyltin diacetate, dibutyltin dilaurate, diethyltin dilaurate, dimethyltin dilaurate, dibutyltin maleate, dimethyltin maleate, dioctyltin diacetate, dioctyltin dilaurate, di(2-ethylhexyl)tin oxide, dibutyltin dimercaptide, dibutyltin diisooctylmaleate, dibutyltin diisooctylmercaptoacetate, dimethyltin dimercaptide, dibutyltin dilaurylmercaptide, dimethyltin dilaurylmercaptide, dimethyltin diisooctylmercaptoacetate, dimethyldi(n-butyl)tin bis(isooctylmercaptoacetate), dibutyltin bis-isooctyl maleate, dibutyltin di-2-ethylhexoate, dilauryltin diacetate, dioctyltin diacetate, trialkyltin hydroxide, dialkyltin oxide, dibutyltin sulfide, di(isooctyl)tin bis(isooctyl-mercaptoacetate), zinc neodecanate, iron acetylacetonate, and bismuth compounds such as octoate, neodecanoate, pivalate, 2-theylhexanoate, naphthanate, iron pentanedione, nickel acetylacetonate, and combinations thereof. Further, the catalysts can be used in amounts ranging from about 0.01 to about 10 wt.0 %, or about 0.01 wt.% to about 1.0 wt. %, or from about 0.01 wt.% to about 0.5 wt. % of the Part B.

The polymerizable adhesive composition can optionally include pigments. Suitable pigments can include inorganic pigments such as transition metal salts; organic pigments such as azo compounds; and carbon black.

The Part A and Part B components are kept separate until a hybrid adhesive is used. The hybrid adhesive comprises various weight or volume ratios of the Part A component to Part B component. For example, the weight ratio of the Part A: Part B can be varied from about 10:1 to about 1: 10, or from about 4:1 to about 1:4, or from about 3:1 to about 1:3, or from about 2:1 to about 1:2, or about 1:1. The volume ratio of the Part A: Part B can be varied from about 10:1 to about 1: 10, or from about 4:1 to about 1:4, or from about 3:1 to about 1:3, or from about 2:1 to about 1:2, or about 1:1, it being understood that various other weight or volume ratios are within the scope of the present disclosure, as one skilled in the art will appreciate, after reading the disclosure, that all ranges and values within these explicitly stated ranges are contemplated. In one non-limiting embodiment, the volume ratio of the Part A: Part B is about 1:1.

The amounts of polyurethane present in the resulting hybrid adhesive can be varied from about 2.0 wt. % to about 98.0 wt. %, or from about 30.0 wt % to about 98.0 wt %, or from about 70.0 wt % to about 98.0 wt. %, all based on the reactive components excluding the fillers. Similarly, the amounts of acrylic polymer present in the hybrid adhesive can be varied from about 2.0 wt. % to about 98.0 wt. %, or from about 2.0 wt. % to about 70.0 wt. %, or from about 2.0 wt. % to about 30.0 wt. %, all based on the reactive components excluding the fillers. In another non-limiting embodiment of the present disclosure, the amount of acrylic polymer is less than 10.0 wt.% based on the reactive components excluding the fillers. The reactive components can typically include pre-polymers, free isocyanates, free polyols, free radically polymerizable component and organoborane amines.

The polymerizable adhesive composition according to the present disclosure can be used for bonding various similar or dissimilar materials. In one non-limiting embodiment of the present disclosure, the polymerizable adhesive composition is used for bonding dissimilar materials. The present disclosure is directed to a method for making and using a hybrid adhesive from the polymerizable adhesive composition. The method generally comprises providing the polymerizable adhesive composition described herein, applying the polymerizable adhesive composition to one or more surfaces of a first substrate and then placing at least one surface of a second substrate in contact with the polymerizable adhesive composition, and allowing the hybrid adhesive to cure.

In one non-limiting embodiment, the method comprises providing the polymerizable adhesive composition described herein, mixing the Part A pre-polymer component and Part B curative component to form a mixture, applying the mixture to one or more surfaces of a first substrate and then placing at least one surface of a second substrate in contact with the mixture, and allowing the hybrid adhesive to cure.

The Part A pre-polymer component and Part B curative component upon application can be loaded individually and separately into side-by-side cartridges and pump through a static mix tube or a dynamic mix tube to achieve complete mixing for the application of the polymerizable adhesive composition.

In one non-limiting embodiment, the substrates used in the present disclosure can be dissimilar materials. The dissimilar materials can include, but are not limited to, coated metals, sheet molding composite (SMC), carbon fibers and thermoplastics. The thermoplastics can include, but are not limited to, polypropylene, thermoplastic olefins, nylon, acrylonitrile-butadiene styrene or other thermoplastics known in the art. The polymerizable adhesive composition may be applied to the substrates with or without any surface treatment, such as a wipe on primer, plasma or corona surface treatment and the like. The surface pretreatment mainly depends on the type of surface being bonder. The surface pre-treatment may be needed if at least one of the substrates is PP or TPO. If the substrates are coated metal, SMC or carbon fibers, surface pretreatment may not be necessary

The hybrid adhesives of bonding the substrates together can be used in the manufacture of various useful parts and/or articles. The present disclosure can further encompass parts comprising two or more pieces that are adhered together, such as parts for automobiles and other transportation vehicles like a motorcycle, bicycle, train, boat, airplane or space vehicle. The parts can comprise at least two substrates and one or more layers of the hybrid adhesives, which adhere the substrates to each other. The present disclosure is also directed to an article of manufacture containing the hybrid adhesives.

Advantages of the embodiments disclosed herein may include the following: (1) embodiments which include at least 5 percent by weight of carbon black filler and at least one graft polyether polyol containing polymer have at least about 80% higher lap shear adhesion strength (preferably at least about 100%) after 1 week water soak as compared to embodiments without the carbon black and the graft polyether polyol ("Control"); and (2) embodiments which include at least 5 percent by weight carbon black without the graft polyether polyol containing polymer have at least a about 40% higher lap shear adhesion strength (preferably at least about 50%) after 1 week water soak as compared to the Control. A preferred temperature for the water soak may be 54°C. For the embodiment with both at least 5 weight percent of carbon black and the graft polyether polyol, an exemplary lap shear adhesion strength is at least 600 psi. For the embodiment with at least 5 weight percent carbon black without the graft polyether polyol containing polymer an exemplary lap shear adhesion is at least 450 psi. In more preferred embodiments, the composition will have at least about 10 weight percent of carbon black.

### ASPECTS

A first aspect of the invention includes a polymerizable adhesive composition comprising (i) an organoborane amine complex; (ii) a free polyol; (iii) at least one free radically polymerizable component; (iv) a urethane pre-polymer (v) a free isocyanate; and (vi) either (a) pre-dispersed carbon black filler either alone or in combination with at least one additional filler, and/or (b) at least one graft polyether polyol containing polymer.

A second aspect includes the polymerizable adhesive composition according to aspect 1, wherein the urethane pre-polymer is a hybrid pre-polymer comprising isocyanate terminated urethane pre-polymer, or acrylate capped isocyanate terminated urethane pre-polymer, or acrylate terminated urethane pre-polymer, or any combinations thereof.

A third aspect includes the polymerizable adhesive composition according to aspects 1 or 2, wherein the urethane pre-polymer is isocyanate terminated urethane pre-polymer.

A fourth aspect includes the polymerizable adhesive composition of any one of aspects 1, 2 or 3 wherein the free polyol is selected from the group consisting of polyether polyols, polyester polyols, and any combinations thereof.

A fifth aspect includes the polymerizable adhesive composition of aspect 4, wherein the polyether polyol is selected from the group consisting of substituted or unsubstituted polyalkylene ether glycols, polyhydroxy polyalkylene ethers, ethylene or propylene oxide adducts of polyols, mono-substituted esters of glycerol, and combinations thereof.

A sixth aspect includes the polymerizable adhesive composition of aspect 4, wherein the polyether polyol comprises a polymer of propylene oxide or a copolymer of ethylene and propylene oxide.

A seventh aspect includes the polymerizable adhesive composition of aspect 4, wherein the polyester polyol includes amorphous polyester polyols or liquid polyester polyols or fatty acid polyester polyols, or any combinations thereof.

An eighth aspect includes the polymerizable adhesive composition of any one of aspects 1-7, wherein the free polyol optionally further comprises a dimer fatty polyol, a cardanol based polyester polyol, poly-ε-caprolactone polyol, or any combinations thereof.

A ninth aspect includes the polymerizable adhesive composition of aspect 8, wherein the dimer fatty polyol is derived from a dimer fatty acid with a diol, or from a dimer fatty diol with a diacid, wherein (i) the diol is selected from the group consisting of ethylene glycol, propane diol, butane diol, hexanediol, and combinations thereof, or (ii) the diacid is selected from the group consisting of adipic acid, glutaric acid, succinic acid, pimelic acid, suberic acid, azelaic acid, sebacic acid, heptane dicarboxylic acid, octane dicarboxylic acid, nonane dicarboxylic acid, decane dicarboxylic acid, undecane dicarboxylic acid, dodecane dicarboxylic acid, and combinations thereof.

A tenth aspect includes the polymerizable adhesive composition of any one of aspects 1-9, wherein the at least one free radically polymerizable component is a monomer selected from the group consisting of an alkyl and cycloalkyl acrylate, an alkyl methacrylate, a hydroxyl alkyl acrylate and methacrylate, and combinations thereof.

An eleventh aspect includes the polymerizable adhesive composition of aspect 10, wherein the alkyl and cycloalkyl acrylate is selected from the group consisting of methyl acrylate, ethyl acrylate, isobornyl acrylate, butyl acrylate, n-octyl acrylate, 2-ethylhexyl acrylate, cyclohexyl acrylate, glycidyl acrylate, tetrahydrofurfuryl acrylate, propyl acrylate, and combinations thereof.

A twelfth aspect includes the polymerizable adhesive composition of aspect 10, wherein the alkyl methacrylate is selected from the group consisting of methyl methacrylate, ethyl methacrylate, butyl methacrylate, 2-ethylhexyl methacrylate, isobornyl methacrylate, decyl methacrylate, dodecyl methacrylate, glycidyl methacrylate, tetrahydrofurfuryl methacrylate, propyl methacrylate, methacrylate end capped polyurethane, and any combinations thereof.

A thirteenth aspect includes the polymerizable adhesive composition of aspect 10, wherein the hydroxyl alkyl acrylate and methacrylate are selected from the group consisting of hydroxy propyl acrylate, hydroxyl methyl methacrylate, hydroxyl ethyl methacrylate, hydroxy propyl methacrylate,

A fourteenth aspect includes the polymerizable adhesive composition of any one of aspects 1-13, wherein the polymerizable adhesive composition optionally further comprises a low molecular weight chain extending compound selected from the group consisting of ethylene glycol, diethylene glycol, 1 ,2-propylene glycol, 1 ,3-propylene glycol, dipropylene glycol, 1 ,4-butane diol, 1 ,4-butylene glycol, 1 ,6-hexylene glycol, neopentyl glycol, 3-methyl pentane glycol, 1 ,4- bis(hydroxymethyl)cyclohexane, 1 ,4-cyclohexane-dimethanol, and combinations thereof.

A fifteenth aspect includes the polymerizable adhesive composition of aspect 14, wherein the low molecular weight chain extending compound is 1 ,4-butane diol.

A sixteenth aspect includes the polymerizable adhesive composition of any one of aspects 1-15, wherein the organoborane amine complex comprises a trialkyl borane with a nitrogen-containing compound, wherein the nitrogen- containing compound is a substituted or un-substituted amine selected from the group consisting of a primary amine and tertiary amine.

A seventeenth aspect includes the polymerizable adhesive composition of aspect 15, wherein the amine is a diamine, pyridine, pyrrole or carbazole.

An eighteenth aspect includes the polymerizable adhesive composition of aspect 16, wherein the organoborane amine complex is selected from the group consisting of triethylborane-1,3-diaminopropane amine complex, triethylborane dimethylaminopropyl amine complex, tributylborane dimethylaminopropyl amine complex, triethylborane pyrrolidine complex, tri-t- butylborane pyrrolidine complex, triethylborane pyridine complex, tri-t-butyl pyridine complex, triethylborane methoxypropyl amine complex, and tributylborane methoxypropyl amine complex.

A nineteenth aspect includes the polymerizable adhesive composition of aspect 18, wherein the organoborane amine complex is tributylborane methoxypropyl amine complex or triethylborane-1,3-diaminopropane amine complex.

A twentieth aspect includes the polymerizable adhesive composition of any one of the preceding aspects wherein urethane pre-polymer is prepared from polymerization of an excess isocyanate with at least one free polyol, wherein the isocyanate is selected from the group consisting of an aromatic diisocyanate, and an aliphatic and cycloaliphatic diisocyanate.

A twenty-first aspect includes the polymerizable adhesive composition of aspect 20, wherein the aromatic diisocyanate is selected from the group consisting of 2,4- or 2,6-tolylene diisocyanate (TDI); diphenyl-methylene diisocyanates; naphthalene-1 ,5-diisocyanate; methylene diisocyanate; m- or p-phenylene diisocyanate; modified aromatic diisocyanates containing carbodiimide groups, urethane groups, allophanate groups, isocyanurate groups, urea groups, biuret, or uretonimine groups; and combinations thereof.

A twenty-second aspect includes the polymerizable adhesive composition of aspect 20, wherein the aliphatic and cycloaliphatic diisocyanate is selected from the group consisting of 1 ,4- tetramethylene diisocyanate, 1 ,6-hexamethylene diisocyanate, 2,2,4-trimethyl- 1 ,6-hexamethylene diisocyanate, 1 , 12-dodecamethylene diisocyanate, cyclohexane-1 ,3- or -1 ,4-diisocyanate, 1 -isocyanato-2-isocyanatomethyl cyclopentane, 1 - isocyanato-3-isocyanato-methyl-3,5,5-trimethylcyclohexane (isophorone diisocyanate or IPDI), bis-(4-isocyanatocyclohexyl)-methane, 2,4'-dicyclohexylmethane diisocyanate, 1 ,3- or 1 ,4-bis-(isocyanatomethyl)- cyclohexane, bis-(4-isocyanato-3-methylcyclohexyl)-methane, α',α',α',α'- tetramethyl-1 ,3- and/or -1 ,4-xylylene diisocyanate, 1 -isocyanato-1 -methyl- 4(3)-isocyanatomethyl cyclohexane, 2,4- or 2,6-hexahydrotoluylene diisocyanate, and combinations thereof.

A twenty-third aspect includes the polymerizable adhesive composition of any one of the preceding aspects wherein the carbon black is present in an amount of from 5.0 wt.% to 20.0 wt. %, based on the total composition weight.

A twenty-fourth aspect includes the polymerizable adhesive composition of any one of the preceding aspects wherein the additional filler is selected from the group consisting of talc, mica, kaolin, bentone clay, aluminum oxides, titanium oxides, iron oxides, barium sulfate, horn blends, amphibiles, chrysotile, carbon fibers, fumed silica, molecular sieves and combinations thereof.

A twenty-fifth aspect includes the polymerizable adhesive composition of any one of the preceding aspects 1-22 and 24 wherein the additional filler is present in an amount of from 10.0 wt.% to 30.0 wt.%, based on the total composition weight.

A twenty-sixth aspect includes the polymerizable adhesive composition of any one of the preceding aspects wherein the graft polyether polyol containing polymer is a polyether triol containing copolymerized styrene and acrylonitrile polymer.

A twenty-seventh aspect includes the polymerizable adhesive composition of any one of the preceding aspects wherein the graft polyether polyol containing polymer present in an amount of from 2.0 wt.% to 30.0 wt.%, based on the total composition weight.

A twenty-eighth aspect includes the polymerizable adhesive composition of any one of the preceding aspects further comprising a catalyst selected from the group consisting of triethylamine, benzyldimethylamine, triethylenediamine, tetramethylbutanediamine, diazobicycloundecene, stannous acetate, stannous octoate, stannous laurate, stannous oleate, dialkyl tin salts of carboxylic acids such as dibutyltin diacetate, dibutyltin dilaurate, dibutyltin maleate, dibutyltin di-2-ethylhexoate, dilauryltin diacetate, dioctyltin diacetate, trialkyltin hydroxide, dialkyltin oxide, dibutyltin disulfide, dibutyl tin diisooctylmaleate, dibutyltin dilauryl mercaptide, dibutyltin di(isooctylmercaptoacetate), zinc neodecanate, iron acetylacetonate, and combinations thereof.

A twenty-ninth aspect includes the polymerizable adhesive composition of any one of the preceding aspects bonds similar or dissimilar material substrates and is free of plasticizers and toughening agents.

A thirtieth aspect includes the polymerizable adhesive composition of any one of the preceding aspects, wherein the composition has a glass transition temperature less than -10° C.

A thirty-first aspect includes a polymerizable adhesive composition comprising (i) a urethane pre-polymer; (ii) free polyol; (iii) a free isocyanate; (iv) at least one free radically polymerizable component; (v) an organoborane amine complex; and (vi) pre-dispersed carbon black filler either alone or in combination with at least one additional filler; and (vii) at least one graft polyether polyol containing polymer.

A thirty-second aspect includes a composition of matter comprising at least two substrates each having at least one surface and the polymerizable adhesive composition of any one of aspects 1 to 31, wherein the substrates comprise unsaturated polyester resin, vinyl ester resin, epoxy resin, metal, polypropylene, thermoplastic olefins, nylon, acrylonitrile-butadiene styrene and combinations thereof.

A thirty-third aspect includes an article comprising the composition of matter of aspect 31.

A thirty-fourth aspect includes a method for bonding at least two substrates comprising steps of: (a) providing a first substrate with at least one surface, (b) providing a second substrate with at least one surface, (c) providing the polymerizable adhesive composition of any one of aspects 1 to 32, and (d) applying the polymerizable adhesive composition to the at least one surface of the first substrate, the second substrate or both the first and second substrates, aligning the first substrate and second substrate so that a surface of one of the substrates having the polymerizable adhesive composition is juxtaposed and in contact with a surface of the other substrate, and curing the polymerizable adhesive composition.

A thirty-fifth aspect includes the method of aspect 34, wherein the substrates comprise unsaturated polyester resin, vinyl ester resin, epoxy resin, metal, polypropylene, thermoplastic olefins, nylon, acrylonitrile-butadiene styrene and combinations thereof.

A thirty-sixth aspect includes the method of aspect 34, wherein the polymerizable adhesive composition is applied with a static or a dynamic mixer.

A thirty-seventh aspect includes the composition of any one of aspects 1-22 and 24-31 wherein a concentration of the carbon black filler comprises at least about 5 wt%.

A thirty-eighth aspect includes the composition of aspect 37 wherein the concentration comprises at least 8 wt%.

A thirty-ninth aspect includes the composition of aspect 38 wherein the concentration comprises at least 10 wt%.

A fortieth aspect includes the composition of aspect 38 wherein the concentration comprises no more than 30 wt%.

A forty-first aspect the composition of any one of the preceding aspects 1-31 and 37-40 wherein the amount of an organoborane amine complex comprises up to 5 wt%.

The polymers and their applications according to the present disclosure may be prepared and used according to the examples set out below. These examples are presented herein for purposes of illustration of the present disclosure and are not intended to be limiting, for example, the preparations of the polymers and their applications.

### EXAMPLES

### TEST METHODS:

Unless indicated otherwise, the following test methods were utilized in the Examples that follows:

### EXAMPLE 1: Preparation of Pre-polymer A1

38.0 grams of Pluracol^{®} P2010, 0.3 grams of Pluracol TP 440, 5.0 grams of Priplast^{™} 3238, 5.0 grams of dry talc, 12.0 grams of pre-dispersed carbon black filler, 0.5 grams of fumed silica, 23.0 grams of Rubinate^{®} 1680 were mixed to form a mixture. The mixture was then heated to about 65 °C - 70°C and maintained at the temperature for about 60 minutes. 8.0 grams of molecular sieve Type 5A, 1g of hydroxypropyl methacrylate and 7.0 grams of tetrahydrofurfuryl methacrylate were added into the mixture to form Pre-polymer A1 having an NCO content of about 4.5 % and a viscosity of about 30,000 mPa.s at 25 °C.

### EXAMPLE 2 - Preparation of Polymer 1

Hydroxyl terminated urethane modified cross-linking adduct Polymer 1 was prepared by blending 36.0 grams of Dipropylene glycol, 30.6 grams of MDI (Mondur^{®} MLQ, commercially available from Covestro). The mixture was then heated to about 82 °C and continued to mix for about 60 minutes. 33.3 grams of Acclaim 4220N was added into the mixture to form Polymer 1.

### Example 3 - Curative B1

33.2 grams of Acclaim^{®} 4220N, 33.0 grams of Hyperlite E-855, 5.0 grams of Polymer 1, 25.0 grams of dry talc, 0.25 grams of fumed silica, 2.1 grams of 1,4-butanediol, 0.5 grams of piperazine, 0.18 grams of dibutyltin disulfide, and 0.2 grams of tri-n-butylborane-3-methoxy-1-propylamine (TnBB MOPA) were mixed to form Curative B1 having a final viscosity of about 32,000 mPa.s at 25 °C.

### Example 4 - Pre-polymer A2

38.0 grams of Pluracol^{®} P2010, 0.3 grams of Pluracol TP 440, 5.0 grams of Priplast^{™} 3238, 16.4 grams of dry talc, 1.2 grams of fumed silica, 23.0 grams of Rubinate^{®} 1680 were mixed to form a mixture. The mixture was then heated to about 65 °C - 70°C and maintained at the temperature for about 60 minutes. 8.0 grams of molecular sieve Type 5A, 1g of hydroxypropyl methacrylate and 7.0 grams of tetrahydrofurfuryl methacrylate were added into the mixture to form Pre-polymer A2 having a NCO content of about 4.5 percent and a viscosity of about 30,000 mPa.s at 25 °C.

### Example 5 - Curative B2

40.5 grams of Acclaim^{®} 4220N, 23 grams of Acclaim 6320N, 5.0 grams of Polymer 1, 27.6 grams of dry talc, 0.6 grams of fumed silica, 1.65 grams of 1,4-butanediol, 0.75 grams of piperazine, 0.18 grams of dibutyltin disulfide, and 0.2 grams of tri-n-butylborane-3-methoxy-1-propylamine (TnBB MOPA) were mixed to form Curative B2 having a final viscosity of about 35,000 mPa.s at 25 °C.

### Examples 6-9

In Examples 6-9 as shown in Table 1, the pre-polymers and curatives prepared in Examples 1-5 were loaded separately into side by side cartridges and pump through a static mix tube to achieve complete mixing as shown in Table 1. Then the mixed polymerizable adhesive compositions were applied directly from the static mix tube onto one side of the testing substrate. A lap shear test was conducted to measure the lap shear strength of adhesive bonds.

The lap shear test sample was prepared by overlapping the last 12.5 mm of a pair of 10 by 12.5 mm coupons with the adhesive and 0.76 mm glass spacer beads between the overlap. The sample was placed between a two-sided fixture held at a curing temperature until solidified. Then the sample was removed from the fixture and held at about 20 to 25 °C for about 24 to 72 hours for the test. The lap shear test was conducted according to ASTM D5868 with a crosshead speed of 12.5 mm per minute. ASTM D5868 is incorporated herein by reference by its entirety. All adhesives were prepared at an isocyanate index in a range of from about 100 to about 110 unless otherwise noted.

**TABLE 1. Pre-polymer and Curative Combinations**

| Examples | Pre-polymer | Curative | Pre-polymer/Curative Volume Ratio |
|---|---|---|---|
| 6 | A1 | B1 | 1:1 |
| 7 | A1 | B2 | 1:1 |
| 8 | A2 | B1 | 1:1 |
| 9 | A2 | B2 | 1:1 (Control) |

The adhesives prepared from Example 6-9 were used to bond polypropylene (PP) to thermoplastic olefin (TPO), which are low surface energy substrates. Table 2 lists the substrates. The PP used was Trinseo DLGF9411 which has 40% fiber glass, commercially available from Trinseo. The TPO used was Hifax TYC 1235X commercially available from Londellbasell.

The substrates used for testing the adhesives from Examples 6-9 were wiped with IPA, followed by flame treatment. No primer was applied on these substrates. Adhesives were cured at 80 °C for 90 second. The lap shear was tested at about 20 - 25 °C. Both strength and failure pattern (% passing) were evaluated. In addition to that lap shear samples were tested after soaked in water (54 °C) for 1 week. Test was run after 2 hours recover. The results listed in Table 2 show that Example 6 (A1/B1), which has both carbon black and styrene/acrylonitrile copolymer (Hyperlite E-855 (claimed graft polyether polyol)), has 100% pass and much higher water soak strength compared to Example 9 (A2/B2) (control), which has no carbon black and no styrene/acrylonitrile copolymer. Water soak strength of Example 7 (A1/B2), which has carbon black and but no styrene/acrylonitrile copolymer, and Example 8 (A2/B1), which has no carbon black and but has styrene/acrylonitrile copolymer, were much lower than that of Example 6, but higher than that of Example 9 (control).

**TABLE 2. Lap Shear Strength on Thermoplastics**

| Example | Substrate PP/TPO | Lap shear at RT | | Lap shear after 1 week water soak (54 °C) | |
|---|---|---|---|---|---|
| | | Strength (psi) | % Pass | Strength (psi) | % Pass |
| 6 | Trinseo DLGF9411/Hifax TYC 1235X | 627 | 100 | 631 | 100 |
| 7 | Trinseo DLGF9411/Hifax TYC 1235X | 662 | 100 | 470 | 100 |
| 8 | Trinseo DLGF 9411/ Hifax TYC 1235X | 587 | 100 | 372 | 100 |
| 9 | Trinseo DGLF 9411/Hifax TYC 1235X | 509 | 100 | 307 | 100 |

**TABLE 3. Glass transition (Tg) temperature and Modulus data**

| **Example** | **Tg (C)** | **Young's Modulus (Mpa)** |
|---|---|---|
| 6 | -37.7 | 2 |
| 7 | -37.3 | 1.6 |
| 8 | -37.9 | 2.0 |
| 9 | -38.3 | 1.2 |

The basic relationship modulus has to adhesives is: the higher Tg, the higher the cross-linked density and higher the modulus. A high Tg along with high storage modulus, results in a high stiffness which in most cases equates to a low percentage of elongation and poor energy dissipation when stressed at ambient temperature. As the material becomes stiffer, both the Young's modulus and storage modulus will become higher, and *vice-versa* (higher Tg means high modulus, low elongation). Further, Tg or the glass transition temperature is the temperature when an amorphous material undergoes the gradual and reversible transition from a hard and relatively brittle "glassy" stage into a soft and "rubbery" stage as the temperature is increased. If the Tg of the adhesive is higher than the room temperature, then the adhesive will appear hard and brittle at room temperature, as it is in the "glassy" stage. If its Tg is lower than room temperature, then that adhesive will appear as a rubbery material at room temperature. Physical properties of a "glassy" adhesive are dramatically different from that of a "rubbery" adhesive, including tensile strength, modulus, elongation, etc. For bonding dissimilar materials, the glass transition temperature of the adhesive should be below room temperature, preferably below -10 °C. The present examples show the glass transition temperature in the range of from -37.7° C to -38.3° C. which is below room temperature or preferably below -10 °C.

## Claims

1. A polymerizable adhesive composition comprising
(i) an organoborane amine complex; (ii) a free polyol; (iii) at least one free radically polymerizable component; (iv) a urethane pre-polymer (v) a free isocyanate; and (vi)
(a) pre-dispersed carbon black filler either alone or in combination with at least one additional filler, or
(b) at least one graft polyether polyol containing polymer.

2. The polymerizable adhesive composition according to claim 1, wherein the urethane pre-polymer is a hybrid pre-polymer comprising isocyanate terminated urethane pre-polymer, or acrylate capped isocyanate terminated urethane pre-polymer, or acrylate terminated urethane pre-polymer, or any combinations thereof.

3. The polymerizable adhesive composition according to claims 1 or 2, wherein the urethane pre-polymer is isocyanate terminated urethane pre-polymer.

4. The polymerizable adhesive composition of any one of claims 1, 2 or 3 wherein the free polyol is selected from the group consisting of polyether polyols, polyester polyols, and any combinations thereof.

5. The polymerizable adhesive composition of claim 4, wherein the polyether polyol is selected from the group consisting of substituted or unsubstituted polyalkylene ether glycols, polyhydroxy polyalkylene ethers, ethylene or propylene oxide adducts of polyols, mono-substituted esters of glycerol, and combinations thereof.

6. The polymerizable adhesive composition of claim 4, wherein the polyether polyol comprises a polymer of propylene oxide or a copolymer of ethylene and propylene oxide.

7. The polymerizable adhesive composition of claim 4, wherein the polyester polyol includes amorphous polyester polyols or liquid polyester polyols or fatty acid polyester polyols, or any combinations thereof.

8. The polymerizable adhesive composition of any one of claims 1 to 7, wherein the free polyol optionally further comprises a dimer fatty polyol, a cardanol based polyester polyol, poly-ε-caprolactone polyol, or any combinations thereof.

9. The polymerizable adhesive composition of claim 8, wherein the dimer fatty polyol is derived from a dimer fatty acid with a diol, or from a dimer fatty diol with a diacid, wherein (i) the diol is selected from the group consisting of ethylene glycol, propane diol, butane diol, hexanediol, and combinations thereof, or (ii) the diacid is selected from the group consisting of adipic acid, glutaric acid, succinic acid, pimelic acid, suberic acid, azelaic acid, sebacic acid, heptane dicarboxylic acid, octane dicarboxylic acid, nonane dicarboxylic acid, decane dicarboxylic acid, undecane dicarboxylic acid, dodecane dicarboxylic acid, and combinations thereof.

10. The polymerizable adhesive composition of any one of claims 1 to 9, wherein the at least one free radically polymerizable component is a monomer selected from the group consisting of an alkyl and cycloalkyl acrylate, an alkyl methacrylate, a hydroxyl alkyl acrylate and methacrylate, and combinations thereof.

11. The polymerizable adhesive composition of claim 10, wherein the alkyl and cycloalkyl acrylate is selected from the group consisting of methyl acrylate, ethyl acrylate, isobornyl acrylate, butyl acrylate, n-octyl acrylate, 2-ethylhexyl acrylate, cyclohexyl acrylate, glycidyl acrylate, tetrahydrofurfuryl acrylate, propyl acrylate, and combinations thereof.

12. The polymerizable adhesive composition of claim 10, wherein the alkyl methacrylate is selected from the group consisting of methyl methacrylate, ethyl methacrylate, butyl methacrylate, 2-ethylhexyl methacrylate, isobornyl methacrylate, decyl methacrylate, dodecyl methacrylate, glycidyl methacrylate, tetrahydrofurfuryl methacrylate, propyl methacrylate, methacrylate end capped polyurethane, and any combinations thereof.

13. The polymerizable adhesive composition of claim 10, wherein the hydroxyl alkyl acrylate and methacrylate are selected from the group consisting of hydroxy propyl acrylate, hydroxyl methyl methacrylate, hydroxyl ethyl methacrylate, hydroxy propyl methacrylate,

14. The polymerizable adhesive composition of any one of claims 1 to 13, wherein the polymerizable adhesive composition optionally further comprises a low molecular weight chain extending compound selected from the group consisting of ethylene glycol, diethylene glycol, 1 ,2-propylene glycol, 1 ,3-propylene glycol, dipropylene glycol, 1 ,4-butane diol, 1 ,4-butylene glycol, 1 ,6-hexylene glycol, neopentyl glycol, 3-methyl pentane glycol, 1 ,4-bis(hydroxymethyl)cyclohexane, 1 ,4-cyclohexane-dimethanol, and combinations thereof.

15. The polymerizable adhesive composition of claim 14, wherein the low molecular weight chain extending compound is 1 ,4-butane diol.
